# EUROPÄISCHE PATENTSCHRIFT

(11) **EP 2 276 821 B1**
(45) Veröffentlichungstag und Bekanntmachung des Hinweises auf die Patenterteilung: **23.11.2011**
(21) Anmeldenummer: 09749792.9
(22) Anmeldetag: 18.05.2009
(51) Int. Cl.: C09K 9/02

(54) **ELEKTROCHROME FORMULIERUNG UND ORGANISCHES ELEKTROCHROM SCHALTBARES ELEKTRONISCHES BAUTEIL**
ELECTROCHROMIC FORMULATION AND ORGANIC ELECTROCHROMIC SWITCHABLE ELECTRONIC COMPONENT
FORMULATION ÉLECTROCHROME ET COMPOSANT ÉLECTRONIQUE ORGANIQUE À COMMUTATION ÉLECTROCHROME

(30) Priorität: 20.05.2008 DE 102008024260
(43) Veröffentlichungstag der Anmeldung: 26.01.2011
(73) Patentinhaber: Siemens Aktiengesellschaft, 80333 München (DE)
(72) Erfinder: KANITZ, Andreas, 91315 Höchstadt (DE); ROTH, Wolfgang, 91080 Uttenreuth (DE)
(74) Vertreter: Wolff, Harry
(86) Internationale Anmeldenummer: PCT/EP2009/055994
(87) Internationale Veröffentlichungsnummer: WO 2009/141302

(56) Entgegenhaltungen:
- EP-A1- 0 319 156
- WO-A1-2007/006767
- WO-A1-2007/107487
- WO-A1-2007/113190
- WO-A1-2008/037643
- US-A- 3 856 714
- LIJUN LIANG ET AL: "PREPARATION OF VIOLOGEN POLYMERS WITH CARBON CHAIN SPACERS AND THEIR APPLICATION TO THE ELECTRON-TRANSFER REACTION IN HETEROPHASES" POLYMERS FOR ADVANCED TECHNOLOGIES, WILEY & SONS, BOGNOR REGIS, GB, Bd. 10, Nr. 1/02, 1. Januar 1999 (1999-01-01), Seiten 60-64, XP000799437 ISSN: 1042-7147

## Beschreibung

Die vorliegende Erfindung betrifft eine elektrochrome Formulierung mit einem neuartigen Farbstoff und ein organisches elektrochrom schaltbares elektronisches Bauteil mit hoher Schaltgeschwindigkeit. Diese Bauteile werden zum Aufbau von elektrochromen Displays eingesetzt.

Elektrochrome Displays auf Basis organischer Materialien umfassen im Normalfall eine aktive elektrochrome Schicht, die sich im Falle eines Displays zwischen senkrecht zueinander angeordneten Elektroden befindet. Wesentliche Bestandteile der aktiven Schicht sind ein Redox-System und ein pH-aktiver Farbstoff. Durch das Anlegen einer Spannung wird das Konzentrationsverhältnis der Redox-Partner zueinander im Material verschoben. Bei dieser Reaktion werden im Material Protonen und/oder Ionen freigesetzt bzw. gebunden, welches sich auf den pH-Wert auswirkt. Wenn eine Spannung an das Material angelegt wird, dann läuft die Verschiebung des Gleichgewichts der Redox-Partner an den beiden Elektroden in entgegen gesetzter Richtung. Dies führt dazu, dass an der einen Elektrode der pH-Wert steigt, während er an der Gegenelektrode sinkt. Über einen pH-Farbstoff wird die Änderung des pH-Wertes dann in eine Farbänderung des Materials umgesetzt und das Anlegen der Spannung sichtbar gemacht.

Ein Prinzip elektrochrome Displays zu verwirklichen besteht darin, die Farbänderung nicht durch die Änderung des pH-Wertes im Display herbeizuführen, sondern die ohnehin stattfindenden Redoxprozesse zu nutzen, um kontrastreiche Farbwechsel durch die Bildung reduktiver und/oder oxidativer Zustände in geeigneten Materialien zu erzeugen. Dabei sind vor allem die sogenannten Viologene und Polythiophene als Materialklassen bekannt geworden.

In der WO 2007/006767 (PCT/EP2006/064048) werden entsprechende Farbstoffe, die sich bewährt haben, offebnbart. Ahnliche Farbstoffe sind auch aus der US 3856714 und der EP0319156 bekant.

Elektrochrom aktive Formulierungen schalten reversibel zwischen zwei Farbzuständen, die durch die Art des elektrochrom aktiven Farbstoffs vorgegeben sind. Beispielsweise ist ein auf einer Viologenstruktur basierender Farbstoff im ungeschalteten Zustand farblos bzw. wegen des Weißpigments weiß, im geschalteten Zustand dagegen violett.

Der Erfindung liegt die Aufgabe zugrunde, weiter Farbeffekte in elektrochromen Bauteilen durch Variation der Farbstoffe zu ermöglichen.

Gegenstand der vorliegenden Erfindung und Lösung der Aufgabe ist die Herstellung eines elektrochrom aktiven Farbstoffes vom Viologentyp, der jedoch durch Substituenteneffekte nicht wie gewöhnlich von farblos nach violett schaltet, sondern zu einem brillanten Blau.

Gemäß der Erfindung wird eine elektrochrome Formulierung vorgeschlagen, die zumindest einen elektrochrom aktiven Farbstoff, der die folgende Struktur hat 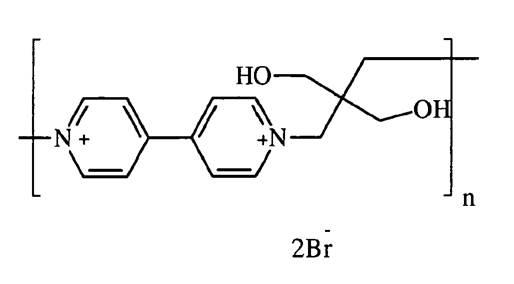 mit n = beliebig, je nach Polymerisationsgrad, umfasst.

Gegenstand der Erfindung ist außerdem noch ein organisches elektrochromes elektronisches Bauteil, zumindest zwei Elektroden und dazwischen eine organische aktive Schicht umfassend, wobei die organische aktive Schicht zumindest eine Formulierung mit dem oben genannten Farbstoff enthält.

Nach einer bevorzugten Ausführungsform liegt der Wert des Index n im Bereich zwischen 5 und 300.

Die neue Farbe wird vermutlich durch Verhinderung der Stapelung der 4,4'-Bipyridineinheiten (die auch π-Merisation genannt wird) erreicht und dadurch lässt sich der Farbstoff zu einem brillanten Blau schalten. In diesem Fall blockieren die Hydroxyfunktionen die Stapelung zu π-Meren.

Weiterer Vorteil der Formulierung mit dem neuartigen Farbstoff ist, dass der Farbstoff in seiner Formulierung im Display durch die Substituenteneffekte ein sehr schnelles An-und Ausschaltverhalten im Bereich 60 - 100 ms (gewöhnlich im Bereich von 0,5 bis 2 Sekunden) aufweist. Gleichzeitig erhöhen die Substituenteneffekte im geschalteten Zustand auch die Farbtiefe, wodurch bei einer geringeren Leistungsaufnahme ein höherer Kontrast erreicht werden kann.

Der neue Typ viologener Farbstoffe zeigt daher einige Vorteile gegenüber den bisher bekannten, von der neuartigen Farbe über die höhere Farbtiefe bei geringerer Leistungsaufnahme und dadurch Belastung des Bauteils und schließlich das schnelle Schaltverhalten.

### Ausführungsbeispiele

### 1) Herstellung des elektrochrom aktiven Farbstoffs: Poly-2,2-dihydroxymethylpropylen-4,4'-bipyridylium-dibromid

15,6g 4, 4'-Bipyridyl und 26,2g 1,3-(2,2-Dihydroxymethyl)propylenbromid werden 6h unter Rühren bei 180°C in Diethylenglykol erwärmt. Nach dem Abkühlen ist die entstandene Lösung bereit zur Herstellung einer elektrochromen Formulierung.

### 2) Herstellung einer elektrochrom aktiven Farbstoffformulierung

In 3g der nach 1 hergestellten Farbstofflösung werden 6g Titandioxid und 0,125g Ferrocen mittels eines Speedmixers dispergiert. Es wird eine hellweiße Paste erhalten.

### 3) Herstellung einer elektrochrom aktiven Zelle.

Die nach 2 erhaltene Paste wird mittels Rakeln auf ein ITO-Substrat appliziert. Ein weiteres ITO-Substrat dient als Gegenelektrode. Beim Anlegen einer Spannung entsteht an der Kathode ein blauer Farbeindruck, der nach dem Umpolen wieder weiß wird. Die Schaltgeschwindigkeit (an) beträgt 80 ms bzw. 100 ms (aus).

Die vorliegende Erfindung betrifft eine elektrochrome Formulierung mit einem neuartigen Farbstoff und ein organisches elektrochrom schaltbares elektronisches Bauteil mit hoher Schaltgeschwindigkeit. Diese Bauteile werden zum Aufbau von elektrochromen Displays eingesetzt. Der neue Farbstoff hat Substituenten, die eine n-Merisierung der aromatischen Einheiten einschränkt oder verhindert.

## Patentansprüche

1. Elektrochrome Formulierung, die zumindest einen elektrochrom aktiven Farbstoff, der die folgende Struktur hat 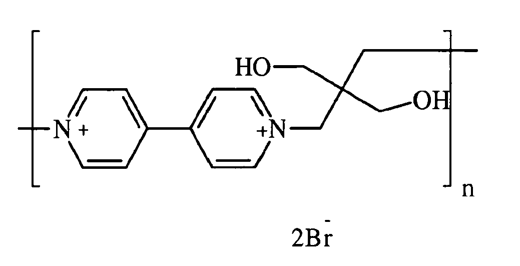 mit n = beliebig, je nach Polymerisationsgrad,
umfasst.

2. Formulierung nach Anspruch 1, wobei der Wert des Indexes n im Bereich zwischen 5 und 300 liegt.

3. Organisches elektrochromes elektronisches Bauteil, zumindest zwei Elektroden und dazwischen eine organische aktive Schicht umfassend, wobei die organische aktive Schicht zumindest eine Formulierung nach Anspruch 1 enthält.

## Claims

1. Electrochromic formulation which comprises at least one electrochromically active dye which has the following structure 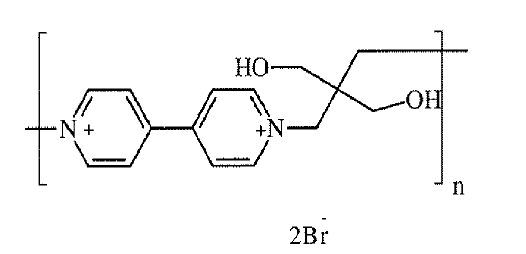 where n = any number, according to the degree of polymerization.

2. Formulation according to Claim 1, wherein the value of the index n is within the range between 5 and 300.

3. Organic electrochromic electronic component comprising at least two electrodes and an organic active layer in between, wherein the organic active layer comprises at least one formulation according to Claim 1.

## Revendications

1. Formulation électrochrome, qui comprend au moins un colorant actif de manière électrochrome, de la formule suivante 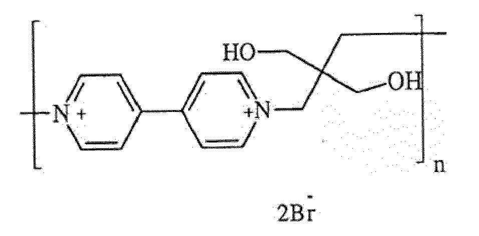 avec n = arbitraire suivant le degré de polymérisation.

2. Formulation suivant la revendication 1, dans laquelle la valeur de l'indice n est comprise entre 5 et 300.

3. Composant électronique organique électrochrome, comprenant au moins deux électrodes et entre elles une couche organique active, la couche organique active contenant au moins une formulation suivant la revendication 1.
